Europäisches Patentamt

European Patent Office

Office européen des brevets

(19)

(11) Veröffentlichungsnummer: **0 002 006**
**B1**

(12) # EUROPÄISCHE PATENTSCHRIFT

(45) Veröffentlichungstag der Patentschrift: **07.04.82**

(51) Int. Cl.³: **C 03 C 25/02, B 05 C 1/08**

(21) Anmeldenummer: **78101289.3**

(22) Anmeldetag: **02.11.78**

(54) Vorrichtung zum kontinuierlichen Auftragen von Schlichte, Bindemittel od. dgl. auf sich bewegende mineralische Fäden, insbesondere Glasfäden.

(30) Priorität: **10.11.77 DE 2750312**

(43) Veröffentlichungstag der Anmeldung:
**30.05.79 Patentblatt 79/11**

(45) Bekanntmachung des Hinweises auf die Patenterteilung:
**07.04.82 Patentblatt 82/14**

(84) Benannte Vertragsstaaten:
**BE CH DE FR GB LU NL SE**

(56) Entgegenhaltungen:
**DE - A - 1 577 669**
**US - A - 2 728 972**
**US - A - 3 194 210**
**US - A - 3 818 861**

(73) Patentinhaber: **SAINT-GOBAIN INDUSTRIES**
**62, Bd Victor Hugo**
**F-92209 Neuilly sur Seine (FR)**

(72) Erfinder: **Holtmann, Robert, Dr.-Ing.**
**Bertholdstrasse 13**
**D-5100 Aachen (DE)**
Erfinder: **Mager, Günther**
**Konrad-Adenauer-Strasse 14**
**D-5190 Stolberg (DE)**

(74) Vertreter: **Biermann, Wilhelm, Dr.-Ing.**
**Compagnie de Saint-Gobain-Pont-A-Mousson**
**Zweigniederlassung Deutschland Postfach 14 90**
**Oppenhoffallee 143**
**D-5100 Aachen (DE)**

# Vorrichtung zum kontinuierlichen Auftragen von Schlichte, Bindemittel od. dgl. auf sich bewegende mineralische Fäden, insbesondere Glasfäden.

Die Erfindung bezieht sich auf eine Vorrichtung zum kontinuierlichen Beschichten von mineralischen Fäden, insbesondere Glasfäden, mittels einer in ein Bad eintauchenden Walze und einer an der Walze angeordneten und mit der Walzenoberfläche einen veränderbaren Spalt bildenden Rakel zum Abstreifen überschüssiger Schichtmasse, wobei zwischen der Rakel und der Oberfläche der Walze die Spaltbreite definierende Distanzstücke vorgesehen sind, die in der Rakelebene angeordnet sind und über die die Rakel an der Walzenoberfläche unter Druck anliegt.

Bei der Herstellung von kontinuierlichen Fäden aus mineralischem Material, insbesondere Glasfäden, ist es üblich, auf diese, bevor sie zu einem Spinnfaden zusammengefaßt und auf eine rotierende, ihrem Ausziehen dienende Spule aufgewickelt werden, eine Schlichte aufzubringen, um eine Reibung der Fäden untereinander zu verhindern und einen Zusammenhalt der Fäden im Spinnfaden zu gewährleisten.

Eine bekannte Vorrichtung zum Aufbringen der Schlichte auf Fasern, z.B. aus Glas, zeichnet sich dadurch aus, daß die Schlichte aus einem ein Schlichtebad enthaltenden Schlichtetrog mittels einer in das Schlichtebad zum Teil eintauchenden Walze entnommen und auf die an ihr vorbeigleitenden Fäden übertragen wird.

Die von der Walze mitgenommene Schlichte bildet auf der Walze einen Film, dessen Dicke von der Viskosität und der Oberflächenspannung der Schlichte sowie von der Drehzahl, dem Werkstoff und der Eintauchtiefe der Walze abhängt. Bei dieser üblichen Arbeitsweise ist der Schlichtefilm je nach Schlichtetyp unterschiedlich dick und außerdem ungleichmäßig, was zur Schaumbildung oder zu unbenetzten Stellen auf der Walze und somit zu Fadenrissen führen kann. Außerdem bildet sich ein Überschuß an Schlichte auf der Walze, der durch die vorbeigleitenden Fäden mitgerissen und wieder abgeschleudert wird und verloren geht. Auch verschmutzt dieser abgeschleuderte Schlichteüberschuß in mehr oder weniger fein verteilter Form die umgebende Luft sowie die Ziehanlage, den Spulraum und die Klimaanlagen, so daß die Maschinen schon nach wenigen Tagen gereinigt werden müssen. Außerdem führt der Überschuß zu Verunreinigungen des Abwassers.

Aus der DE—A 1 577 669 ist eine Vorrichtung bekannt zum Beschichten von Materialbahnen, wie Folien aus Kunststoff oder Metall, Papier, Gewebe und dergleichen mittels einer in ein Bad eintauchenden Walze und einer an der Walze angeordneten und mit der Walzenoberfläche einen veränderbaren Spalt bildenden Rakel zum Abstreifen überschüssiger Schichtmasse, wobei die Rakel mit in der Rakelebene angeordneten, die Spaltbreite definierenden Distanzstücken versehen ist, die an der Walzenoberfläche unter Druck anliegen. Die Distanzstücke werden bei dieser bekannten Vorrichtung dadurch gebildet, daß die Rakel an der Abstreifkante mit gleichmäßigen Einkerbungen versehen ist und mit dieser eingekerbten Kante gegen die Oberfläche der Walze gepresst wird. Da die Beschichtungsmasse durch die Einkerbungen entlang der Rakelkante hindurchtritt, bildet sich auf der Oberfläche der Walze eine ungleichmäßig dicke Schicht mit parallelen Streifen aus Beschichtungsmasse. Ferner ist durch die an der ganzen Länge der Walze anliegende eingekerbte Kante der Rakel der Verschleiß der Walzenoberfläche und der Rakelkante beträchtlich und muß durch besondere Maßnahmen—Hin- und Herbewegung der Rakel—herabgesetzt werden. Mit dieser bekann-ten Vorrichtung ist eine gleichmäßige Schlichtung von Glasfäden im Zuge ihrer Herstellung nicht möglich, denn bei den dabei üblichen Drehzahlen der Schlichtewalzen—bis zu 100 Umdrehungen pro Minute—und den üblichen Schlichteviskositäten würde sich die Schlichte vor der Berührung der Fäden mit der Walze nicht mehr gleichmäßig auf der Walze verteilen können, was zu einem ungleichmäßigen Schlichteauftrag und dort, wo der Schlichtefilm fehlt oder zu dünn ist, sogar zu Fadenbrüchen führen würde.

Der Erfindung liegt die Aufgabe zugrunde, eine Vorrichtung zum kontinuierlichen Beschichten von Fäden, insbesondere Glasfäden im Zuge ihrer Herstellung zu schaffen, durch die ein gleichmäßiger Schlichtefilm auf der gesamten Länge der Walze auch bei unrunden Walzen gebildet wird, so daß den Fäden nur so viel Schlichte zugeführt wird, wie zu ihrer einwandfreien Benetzung unbedingt erforderlich ist, und die außerdem robust im Betrieb und einfach in der Konstruktion ist.

Die Erfindung besteht darin, daß sich die Distanzstücke an den bieden Enden der zwischen diesen Distanzstücken mit einer geradlinigen Abstreifkante versehenen Rakel befinden, und daß die Rakel in einer zur Walze tangentialen Ebene angeordnet ist, und die Distanzstücke tangential an der Walzenoberfläche anliegen.

Durch die erfindungsgemäße Vorrichtung wird ein gleichmäßiger Schlichtefilm von völlig konstanter Dicke gebildet. Dadurch wird nicht nur der Verbrauch an Schlichtemasse herabgesetzt, was zu einer Ersparnis bei manchen Schlichten bis zu 40% führt, sondern es werden auch unerwünschte Verschmutzungen der Anlagen und des Abwassers stark herabgesetzt. Durch die Vergleichmäßigung des Schlichtefilms auf der Walze werden außerdem Fadenbrüche weitgehend vermieden. Die Vorrichtung ist robust und einfach in der Konstruktion. Die Rakel läßt sich auch nachträglich in bereits vorhandene Walzenschlichter einbauen.

Durch den dauernden Kontakt zwischen den Distanzstücken der Rakel und der Walzenoberfläche bleibt auch bei unrunden Walzen und nach einem Walzenwechsel der Spalt und somit der Schlichtefilm zwischen Walze und Abstreifkante konstant. Die tangential an der Walze anliegenden Distanzstücke der Rakel gleiten auf einem dünnen Schlichtefilm, der zwischen den Anlageflächen der Distanzstücke und der Walze erhalten bleibt, so daß der Verschleiß der Rakel und der Walze gering ist.

Im folgenden wird die Erfindung anhand von zwei Ausführingsbeispiele darstellenden Zeichnungen näher erläutert. Es zeigen.

Fig. 1 einen Querschnitt durch eine Ausführungsart der erfindungsgemäßen Vorrichtung

Fig. 2 in perspektivischer Darstellung nur die Walze und die davor angeordnete Rakel gemäß Fig. 1.

Fig. 3 einen Querschnitt in vergrößertem Maßstab durch die Walze und die Rakel gemäß Fig. 2

Fig. 4 einen Querschnitt durch eine gegenüber Fig. 1 abgewandelte Ausgestaltung der erfindungsgemäßen Vorrichtung

Fig. 5 eine Vorderansicht der Vorrichtung gemäß Fig. 4 ohne Schlichtewanne

Fig. 6 eine Teilansicht der Vorrichtung gemäß Fig. 5.

In der Zeichnung ist mit 1 eine Schlichtewalze bezeichnet, die mit einem Teil ihrer Oberfläche in ein in einer Schlichtewanne 3 befindliches Schlichtebad 2 eintaucht. Die sich in Pfeilrichtung 'A' drehende Schlichtewalze 1 nimmt aus dem Schlichtebad 2 Schlichte mit, die auf der Walze 1 einen Film bildet. Durch diesen Film werden die auf der Vorderseite der Walze 1 vorbeigleitenden Glasfäden 4 mit Schlichte benetzt. An der Walze 1 oberhalb des Schlichtebades 2 und in Drehrichtung der Schlichtewalze 1 gesehen vor der Berührungsstelle der Glasfäden 4 mit der Walze 1 ist eine Rakel 5 angeordnet, die aus einem Kunststoff mit guten Gleiteigenschaften, wie Polytetrafluoräthylen oder Polyamid, wie Polyamid 11 oder 12, besteht. Besonders vorteilhaft ist Polytetrafluoräthylen, das weder von den noch heißen Glasfäden, noch von der chemischen Zusammensetzung der üblichen Schlichten angegriffen wird. Je nach Material der Walze kann die Rakel jedoch auch aus anderem geeigneten Material bestehen.

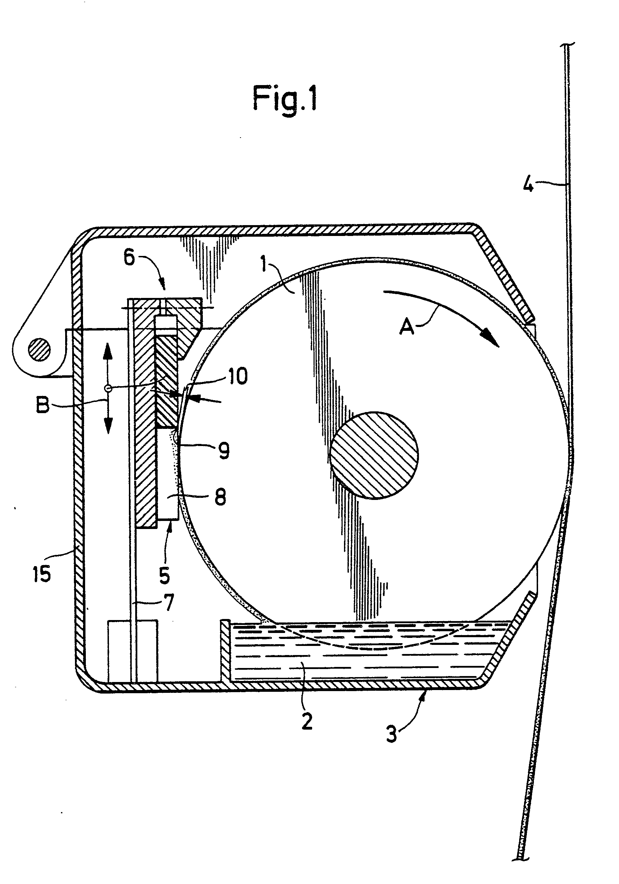

Die Rakel 5 ist U-förmig ausgebildet und liegt mit den Distanzstücken 8 an der Walzenoberfläche an. Die Kante des langgestreckten Verbindungssteges des U bildet die Abstreifkante 9 der Rakel. Die Rakel ist nach der Ausführungsart der Vorrichtung gemäß Fig. 1 in eine Klemmvorrichtung 6 eingespannt und wird durch zwei an der Wandung 15 des die Schlichtevorrichtung aufnehmenden Gehäuses befestigte Blattfedern 7 mit den Anlageflächen der Distanzstücke 8 an die Walze 1 gedrückt. Zwischen der Abstreifkante 9 der Rakel 5 und der Oberfläche der Walze 1 wird ein Spalt 10 gebildet, dessen Breite durch die zur Walzenoberfläche tangentiale Verschiebung der Rakel eingestellt werden kann. Die angedrückten Anlageflächen der Distanzstücke 8 der Rakel 5 gleiten auf einem dünnen Schlichtefilm, der zwischen den Anlageflächen der Distanzstücke 8 und der Walze 1 erhalten bleibt, so daß kein Verschleiß des Kunststoffrakels 5 und der Walze 1 auftritt, der die Spaltbreite 10 beeinflussen könnte. Durch den beständigen Kontakt der Distanzstücke 8 mit der Walze, der durch die Blattfedern 7 gewährleistet ist, bleibt auch bei unrunden Walzen 1 die Spaltbreite 10 konstant. Der Schlichtefilm wird infolgedessen auf der Walze 1 durch die Rakel 5 konstant und gleichmäßig eingestellt.

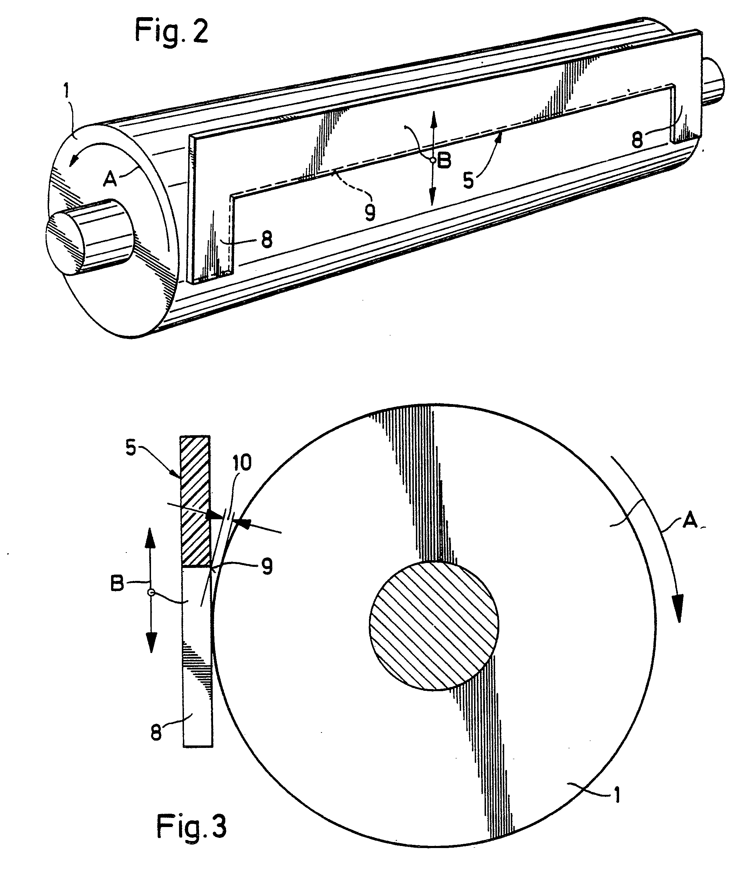

In Fig. 2 und 3 sind nur die Walze 1 und die Rakel 5 dargestellt. Die beiden Distanzstücke 8 liegen an der Walze 1 an. Die Abstreifkante 9 liegt über der Walzenmitte, so daß zwischen Rakel 5 und Walze 1, und zwar zwischen der Kante 9 und der Walzenoberfläche ein Spalt entsteht, durch den die Dicke des Schlichtefilms geregelt wird. Die Drehrichtung der Walze 1 erfolgt in Pfeilrichtung A. Die Kunststoffrakel 5 kann in Pfeilrichtung B verschoben werden, um die Spaltbreite und somit die Dicke des Schlichtefilms einzustellen.

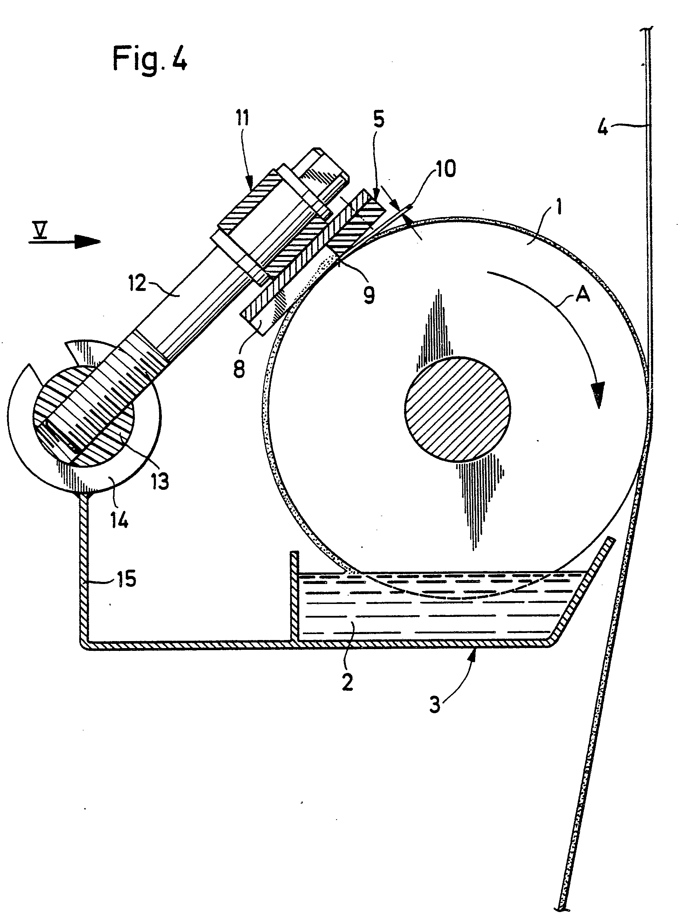

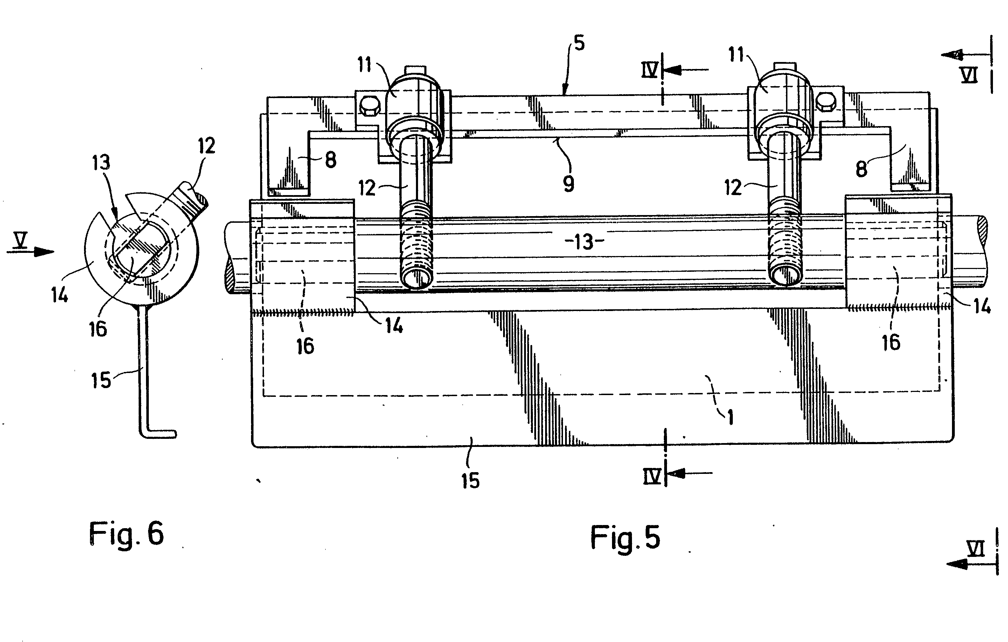

In Fig. 4—6 ist eine gegenüber Fig. 1 abgewandelte Ausführung der erfindungsgemäßen Vorrichtung dargestellt. Die Arbeitsweise ist jedoch die gleiche, wie bei der in Fig. 1 dargestellten Vorrichtung. Die Walze 1 dreht sich in Pfeilrichtung A. An ihrer Vorderseite laufen die Glasfäden 4 vorbei. Die Rakel 5 aus Polytetrafluoräthylen ist tangential zur Walze 1 durch die beiden Gewindespindeln 12 einstellbar. Die Rakel 5 ist an einer Halterung 11 befestigt, in der die beiden Gewindespindeln 12 drehbar gelagert sind. Das Gewinde der Gewindespindeln 12 dreht sich in den Gewindelöchern der Welle 13, die vorzugsweise aus Kunststoff besteht. Die Welle 13 ist in den an der Gehäusewandung 15 befestigten Buchsen 14 drehbar gelagert. Diese Buchsen sind, wie insbesondere aus den Figuren 5 und 6 zu ersehen ist, geschlitzt ausgeführt. Die Drehzapfen 16 der Welle 13 sind abgeflacht ausgebildet, damit die komplette Rakel mit Halterung 11 und Welle 13 zum Reinigen leicht aus dem Schlichter herausgenommen werden kann. Die Rakel 5 weist die gleiche Form wie in Fig. 1 auf und liegt mit den Distanzstücken auf der Walze 1 auf und wird durch Schwerkraft auf ihr gehalten. Zwischen der Abstreifkante 9 und der Walze 1 ist durch eine tangentiale Verschiebung der Rakel 5 die Spaltbreite und somit die Schlichtefilmdicke einstellbar. Die tangentiale Verschiebung erfolgt durch das Drehen der Gewindespindeln 12. Diese Ausführungsform erlaubt eine besonders genaue und sichere Einstellung der Schlichtefilmdicke auf der Walze.

Die erfindungsgemäße Vorrichtung weist gegenüber den bekannten Vorrichtungen bei gleichen Produktionsbedingungen folgende Vorteile auf:

1. Geringerer Schlichteverbrauch. Bei gewissen Schlichten konnte der Schlichteverbrauch bei gleichem Auftrag auf den Faden bis zu 40% gesenkt werden;
2. Geringere Verschmutzung der Produktionsanlagen;
3. Geringere Verschmutzung der Abwässer;
4. Geringere Belästigung des Bedienungspersonals durch den Schlichtenebel;
5. Weniger Fadenbrüche, da sich kein Schaum mehr auf der Walze bildet und auf der Walze keine unbenetzten Stellen mehr vorhanden sind;
6. Durch den gleichmäßigen Schlichtefilm laufen die Fäden ruhiger auf der Walze, was ebenfalls zur Verhinderung eines Fadenbruches beiträgt;
7. Gleichmäßigerer Schlichteauftrag auf die Fäden durch den gleichmäßigen Schlichtefilm;
8. Die Rakel läßt sich nachträglich in bereits vorhandene Walzenschlichter einbauen;
9. Die Schlichtewalze läßt sich wie bisher zum Zwecke der Reinigung oder Wechsels ohne Behinderung ausund einbauen;
10. Leichte Einstellbarkeit der Rakel durch tangentiale Anordnung;
11. Konstante Spaltbreite auch bei unrunden Walzen durch Andrücken der Rakel an die Walze vermittels Federkraft oder Schwerkraft;
12. Stark herabgesetzter Verschleiß der Rakel oder der Walze, da sich immer ein Flüssigkeitsfilm zwischen Rakel und Walze befindet.

**Patentansprüche**

1. Vorrichtung zum kontinuierlichen Beschichten von mineralischen Fäden, insbesondere Glasfäden, mittels einer in ein Bad eintauchenden Walze (1) und einer an der Walze angeordneten und mit der Walzenoberfläche einen veränderbaren Spalt bildenden Rakel (5) zum Abstreifen überschüssiger Schichtmasse, wobei zwischen der Rakel und der Oberfläche der Walze die Spaltbreite definierender Distanzstücke (8) vorgesehen sind, die in der Rakelebene angeordnet sind und über die die Rakel an der Walzenoberfläche unter Druck anliegt, dadurch gekennzeichnet, daß sich die Distanzstücke (8) an den beiden Enden der zwischen diesen Distanzstücken (8) mit einer geradlinigen Abstreifkante (9) versehenen Rakel (5) befinden, und daß die Rakel (5) tangential zur Walze (1) angeordnet ist, und die Distanzstücke (8) tangential an der Walzenoberfläche anliegen.

2. Vorrichtung nach Anspruch 1, dadurch gekennzeichnet, daß die Rakel (5) in tangentialer Richtung (Doppelpfeil B) verstellbar angeordnet ist.

3. Vorrichtung nach Anspruch 1 oder 2, dadurch gekennzeichnet, daß die Rakel (5) in eine Klemmvorrichtung (6) eingespannt ist und die Distanzstücke (8) durch zwei Blattfedern (7) an die Walzenoberfläche gedrückt sind.

4. Vorrichtung nach Anspruch 1 oder 2, dadurch gekennzeichnet, daß die Rakel (5) in einer Welle (13) verschwenkbar gelagert ist und unter Wirkung ihres Eigengewichts mit den Distanzstücken (8) an der Walzenoberfläche anliegt.

5. Vorrichtung nach Anspruch 4, dadurch gekennzeichnet, daß die Rakel an einer Halterung (11) befestigt ist, in der zwei Gewindespindeln (12) mit ihrem einen Ende drehbar gelagert sind, während das andere Ende in der Welle (13) drehbar angeordnet ist.

6. Vorrichtung nach Anspruch 4, dadurch gekennzeichnet, daß die Welle (13) in an einer Wandung (15) befestigten Buchsen (14) drehbar gelagert ist und die Buchsen (14) geschlitzt ausgebildet sind.

7. Vorrichtung nach Anspruch 4—6, gekennzeichnet durch eine abgeflachte Ausbildung der Drehzapfen (16) der Welle (13).

8. Vorrichtung nach einem der Ansprüche 1—7, dadurch gekennzeichnet, daß die Rakel aus einem Kunststoff mit guten Gleiteigenschaften besteht, insbesondere aus Polytetrafluoräthylen oder Polyamid.

**Revendications**

1. Dispositif pour l'enduction continue de fils de matière minérale, en particulier de fils de verre, au moyen d'un rouleau (1) baignant dans un bain et d'une racle (5) associée au rouleau et formant un intervalle variable avec la surface du rouleau pour enlever la matière d'enduction superflue, étant entendu qu'entre la racle et la surface du rouleau sont prévues des pièces d'espacement (8) qui définissent la largeur de l'intervalle, qui sont disposées dans le plan de la racle et par l'intermédiaire desquelles la racle est appliquée sous pression contre la surface du rouleau, caractérisé en ce que les pièces d'espacement (8) sont disposées aux deux extrémités de la racle (5) pourvue d'un bord de raclage droit (9) entre ces pièces d'espacement (8), et la racle (5) est disposée tangentiellement au rouleau (1), les pièces d'espacement (8) étant en contact tangentiel avec la surface du rouleau.

2. Dispositif suivant la revendication 1, caractérisé en ce que la racle (5) est montée réglable dans le sens tangentiel (flèche à deux pointes B).

3. Dispositif suivant la revendication 1 ou 2, caractérisé en ce que la racle (5) est bloquée dans un dispositif de serrage (6) et les pièces d'espacement (8) sont pressées contre la surface du rouleau par deux lames de ressort (7).

4. Dispositif suivant la revendication 1 ou 2, caractérisé en ce que la racle (5) est montée pivotante dans un arbre (13) et est appliquée contre la surface du rouleau par les pièces d'espacement (8) sous l'effet de son propre poids.

5. Dispositif suivant la revendication 4, caractérisé en ce que la racle est fixée à un support (11) dans lequel deux tiges filetées (12) sont montées à rotation par leur première extrémité, tandis que leur autre extrémité tourne dans l'arbre (13).

6. Dispositif suivant la revendication 4, caractérisé en ce que l'arbre (13) est monté à rotation dans des douilles (14) fixées à une paroi (15) et les douilles (14) sont fendues.

7. Dispositif suivant les revendications 4 à 6, caractérisé en ce que les portées (16) de l'arbre (13) présentent des méplats.

8. Dispositif suivant l'une quelconque des revendications 1 à 7, caractérisé en ce que la racle est faite d'une matière plastique présentant de bonnes propriétés de glissement, en particulier de polytétrafluoroéthylène ou d'un polyamide.

## Claims

1. An apparatus for the continuous coating of mineral threads, more specially glass threads, by way of a roller (1) dipping into a bath, and a doctor (5) placed on the roller and having an adjustable space between it and the outer face of the roller, for clearing off excess coating material from the roller, and between the doctor and the outer face of the roller there are distance pieces (8) for controlling the space between the doctor and the roller, such distance pieces (8) being placed in the plane of the doctor, the doctor being forced against the outer face of the roller using distance pieces, characterized in that the distance pieces (8) are positioned at the two ends of the doctor (5) which between these distance pieces (8) has a straight doctoring edge (9) and in that the doctor (5) is placed tangentially with respect to the roller (1) and the distance pieces (8) are placed tangentially against the outer face of the roller.

2. An apparatus as claimed in claim 1, characterized in that the doctor (5) may be changed in position tangentially (two-headed arrow B) for adjustment.

3. An apparatus as claimed in claim 1 or claim 2, characterized in that the doctor (5) is fixed in a gripping system (6) and the distance pieces (8) are forced by two leaf springs (7) against the outer face of the roller.

4. An apparatus as claimed in claim 1 or claim 2, characterized in that the doctor (5) is turningly fixed to a shaft (13) and by its own weight is kept against the outer face of the roller, against which it is rested by way of the distance pieces (8).

5. An apparatus as claimed in claim 4, characterized in that the doctor is fixed to a support (11), in which two threaded rods (12) are turningly supported at one end in each case, while the other end in each case is turningly supported in the shaft (13).

6. An apparatus as claimed in claim 4, characterized in that the shaft (13) is turningly supported in sleeves (14) fixed to a wall (15), the sleeves (14) having narrow openings.

7. An apparatus as claimed in anyone of claims 4 to 6, characterized by a flat design of the turning pins (16) of the shaft (13).

8. An apparatus as claimed in anyone of claims 1 to 7, characterized in that the doctor is made up of a synthetic resin with good low friction properties and more specially of PTFE or polyamide.

# Fig.1

Fig. 2

Fig. 3

Fig. 4

Fig. 6

Fig. 5

0 002 006